# EUROPEAN PATENT APPLICATION

(11) **EP 0 940 212 A2**
(43) Date of publication of application: **08.09.1999**
(21) Application number: 99102388.8
(22) Date of filing: 08.02.1999
(51) Int. Cl.: B23K 11/30

(54) **A device for continuously controlling the clamping force of electrode-carrier yokes in an electric discharge welder, and yokes therefor**

(30) Priority: 09.02.1998 IT BO980065
(71) Applicant: Raind S.r.l., 47030 Sogliano al Rubicone (FO) (IT)
(72) Inventor: Fondriest, Gianni, 47030 Sogliano al Rubicone (Forli) (IT)
(74) Representative: Saconney, Piero

(57) **Abstract**

The invention relates to a device for the continuous control of the clamping force in electrode holder pincers for electric discharge welders, and to pincers therefor. The device (1) includes an elastic main body (2), at least one strain gauge bridge (3), the resistances of which are deformed when an actuator (6) acts on the main body (2), and an amplifier (4) which converts the forces transmitted to the strain gauge bridge (3) into a voltage or current electric signal. When used in electrode holder pincers (7) for electric discharge welders, the device (1) is located in the pin of the pincers (7) so as to detect directly the force exerted by the actuator (6), and is provided with a microprocessor circuit (6) to detect the attainment of a predetermined threshold value of the electric signal whereby to allow the electric discharge.

## Description

The present invention relates to a device for the continuous control of the clamping force in electrode holder pincers for electric discharge welders, and to electrode holder pincers for said welders.

Electric discharge welders are widely used in many manufacturing fields such as, for example, motor vehicles. These use pincer devices which hold the electrodes between which a potential difference is established. In both manual and automated welders, the pincers are closed by means of various kinds of actuators, such as a pneumatic actuator, spring means, a pedal and the like. When the pincers are closed, the clamping force exerted by the actuator between the two electrodes overcomes the resistance of the sheet metal to be welded. In such apparatus, the fulcrum of the pincer has a mechanical function only.

Since the quality of the welding is linked to the correct application of the force exerted by the actuator on the electrodes, sensors are used to calibrate these instruments which sensors, based on the analysis of welding samples, control the force that the actuators must exert to give rise to a discharge, irrespective of the duration of this latter.

Since the calibration procedures only concern the force exerted by the actuators, there is an inconsistency in their output which means that any irregularities in the sheet metal to be welded will lead to imperfect welding.

In fact, if the sheets are not perfectly flat, the actuators reach the threshold level of the force developed by them, corresponding to the discharge point, when the sheets to be welded have not yet reached the predetermined force. In order to avoid this disadvantage, known as "cold welding", the duration of the discharge is usually extended in order to increase the likelihood of obtaining an effective weld. However, when working on flat sheets, prolonging the discharge can give rise to so-called "hot welding" which can even cause the sheets to be perforated, with subsequent inevitable rejection thereof.

The object of the present invention is therefore to eliminate the disadvantages described above. The invention, which is characterised by the claims, overcomes the problem of continuously controlling the force exerted by the actuator by allowing each discharge to occur only when a predetermined threshold value is attained.

One of the advantages of the present invention consists essentially in the fact that a very high standard of welding is achieved that is also very consistent, thus significantly reducing the percentage of rejected material. Furthermore, the production cycle is accelerated since the time window in which the discharge occurs can be reduced to the necessary minimum now that the risk of "cold welding" has practically been eliminated.

The technical characteristics of the invention, according to the aforesaid objects, are clearly recognisable from the appended claims and the advantages thereof will become clearer from the following detailed description, given with reference to the accompanying drawings, which show an embodiment purely by way of non-limitative example, in which:
Figure 1 is a general view of the invention in a condition of use;
Figure 2 shows the invention in a section taken on the line II-II of Figure 1; and
Figure 3 shows the invention as a block diagram.

The invention relates to a device for the continuous control of the clamping force in electrode holder pincers for electric discharge welders, and pincers therefor.

The device 1 in question is an electromechanical component including an elastic main body 2 subject to deformation of the order of hundredths or, at the most, tenths of millimetres following the application of an external force. The body houses means 3 for detecting the force applied and means 4 for converting the mechanical stress into an electrical signal. In the embodiment represented in the drawings, the detection means comprise a strain gauge bridge 3 formed from four strain gauges connected as a Wheatstone bridge, which converts the deformation of the main body 2 into a deformation of the resistances of which it is composed. The conversion means is an amplifier 4 or a signal processor which converts the variation in resistance, held as an electric capacity and arising from the deformation of the resistances held as circuit elements, into a voltage or current electric signal.

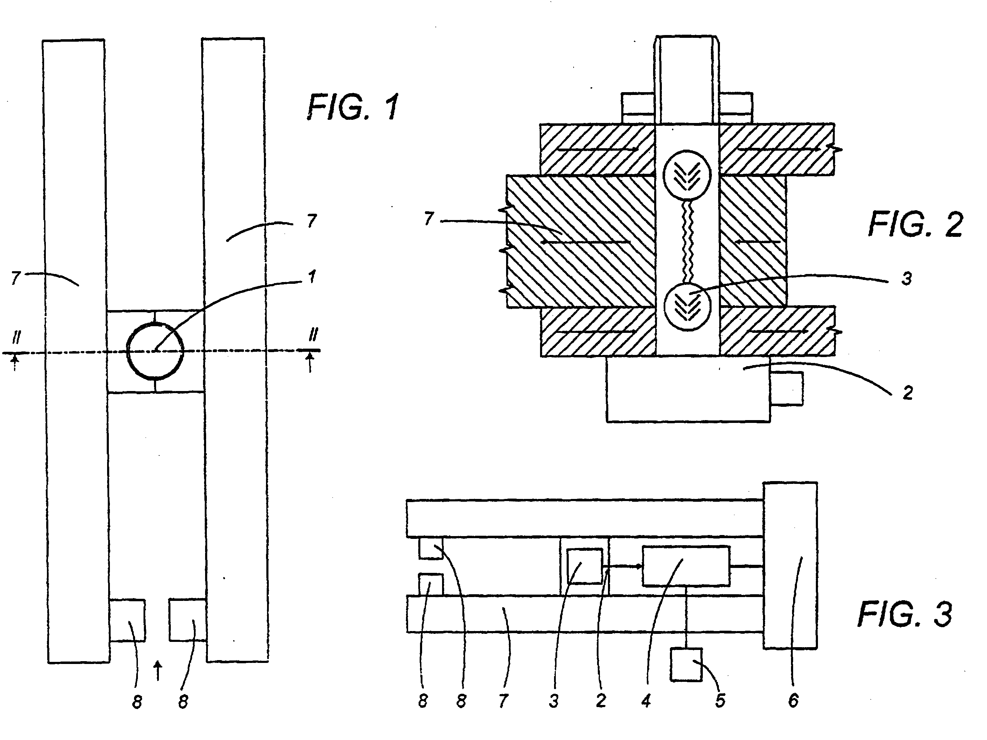

The device 1 described can be used in various applications: a particularly useful use, which is described below, arises in electrode holder pincers 7 for electric discharge welders. As can be seen in Figure 1, the device 1 is housed in a central pin of the pincers 7 in order to detect directly the force exerted by an actuator 6, which is completely arbitrary in nature: it is usually advantageous, and it is particularly clear in this particular application, that the device 1 includes means 5 for detecting the attainment of a threshold value of the electric signal. In the embodiment illustrated, these means comprise a microprocessor circuit 5 which operates by comparison with predetermined parameter values.

The functioning of the pincers 7 thus formed is such that the operation of the actuator 6 causes an elastic deformation of the main body 2 of the device 1, localised in the pin of the pincers 7 themselves, as shown in Figure 2: this deformation causes a mechanical deformation of the resistances comprising the strain gauge bridge 3, accompanied by a variation in their electrical resistance. Since the amplifier 4 receives the value of the resistance as input, a variation in the resistance causes a linear variation in the electric signal output by the amplifier 4, proportional to the variation in the resistance and, therefore, to the force applied. When the microprocessor circuit 5 detects the attainment of the threshold value of the signal, and therefore of the force, it allows the electrical discharge, localised at the end of the electrodes 8 and enables welding to occur.

Finally, the microprocessor circuit 5 can also act in feedback by modifying the force of the actuator 6 as a function of the intensity of the electrical signal detected. In other words, it can limit the force with which the electrodes 8 are brought together for the duration of the welding if it exceeds the design limits or, on the other hand, can increase it if it is not possible to achieve the threshold signal value.

The invention thus described is susceptible of numerous modifications and variations, all falling within the scope of the inventive concept. Furthermore, all of the details can be replaced by technically equivalent elements.

In use, modifications and/or improvements which also fall within the scope of the following claims are obviously possible.

## Claims

1. A device for the continuous control of the clamping force in electric discharge electrode holder pincers (7), characterised in that it comprises an elastic main body (2), means (3) for detecting the force applied and means (4) for converting the mechanical force into an electrical signal.

2. A device according to Claim 1, characterised in that the means for detecting the applied force comprise at least one strain gauge bridge (3) which is adapted to modify its resistance as a result of a mechanical stress.

3. A device according to Claim 1, characterised in that the means for converting the mechanical stress into an electric signal comprise an amplifier (4).

4. A device according to any of Claims 1, 2 and 3, characterised in that it includes means (5) for detecting the attainment of a threshold value of the electrical signal.

5. A device according to Claim 4, characterised in that the said means for detecting the attainment of a threshold value of the electrical signal comprise a microprocessor circuit (5) which acts by comparison with predetermined parameter values.

6. A device according to Claim 4, characterised in that the said microprocessor circuit (5) acts in feedback by modifying the mechanical stress as a function of the intensity of the electric signal.

7. Electrode holder pincers for electric discharge welders, characterised in that they include a device (1) for the continuous control of the clamping force according to any of the preceding claims.

8. Electrode holder pincers according to Claim 7, characterised in that the said device (1) is housed in a central pin of the pincers (7) in such a way as to detect directly the force exerted by an actuator (6).

9. Electrode holder pincers according to Claim 7, characterised in that the device (1) includes a microprocessor circuit (5) which allows the electric discharge only after having detected the attainment of a predetermined threshold value of the electric signal.
